# EUROPEAN PATENT APPLICATION

(11) **EP 4 136 970 A1**
(43) Date of publication of application: **22.02.2023**
(21) Application number: 21787839.6
(22) Date of filing: 08.04.2021
(51) Int. Cl.: A01M 29/10, A01M 29/16

(54) **METHOD AND DEVICE FOR EXERTING A NON-LINEAR PARAMETRIC EFFECT ON BIOLOGICAL ENTITIES**

(30) Priority: 14.04.2020 RU 2020114824
(71) Applicant: Antselevich, Mikhail Aleksandrovich, Moscow, 125222 (RU)
(72) Inventor: Antselevich, Mikhail Aleksandrovich, Moscow, 125222 (RU)
(74) Representative: Jeck, Jonathan
(86) International application number: PCT/RU2021/000150
(87) International publication number: WO 2021/211015

(57) **Abstract**

The present invention relates to an apparatus and method for nonlinear parametric manipulation of a biological object, e.g. small animals, such as birds and rodents, based on the use of nonlinear parametric effects of auditory organs, whereby the influence on the biological object is caused by two acoustic signals with different carrier frequencies, the carrier frequency of the first acoustic signal is fixed, the carrier frequency of the second acoustic signal is wobbling, the first and the second carrier frequency are in the range of the maximum sensitivity of the auditory pathway of the objects, the difference between these frequencies is in the range of the infra-threshold resonance frequencies of the biological object, a parametrically synchronized effect with a pulsed, modulated, optical, incoherent field in the visible wave range is also exerted on the biological objects, and whereby the duration of the pulses as well as the frequency of their repetition are similar to the parameters of pulsed acoustic fields.

## Description

### Field of technology to which the invention relates

The invention relates to a technique for deterring biological objects from protected areas. The biological objects are animals, in particular birds and small animals.

The protected areas are in particular:
- Airfield objects;
- Agricultural land: orchards, vineyards, growing areas of berries, cereals and other crops;
- Livestock, poultry and fish farms;
- Industrial sites.

### State of the art

A bioacoustic method of repelling birds and rodents is known. Such devices are called bioacoustic scarecrows (repellent devices). The method works as follows: Defined signals are sent at random time intervals. These are alarm- and distress signals of the birds to be scared away. The signals are pre-recorded.

The efficiency of the method is higher when several such devices with signals are in use. The bioacoustic method is used with devices of the companies "Bird Gard" (USA) [1, 2] and "Weitech" (Belgium) [3].

The disadvantages of known bioacoustic methods are:
- habituation to the generated sounds as well as their disregard;
- for effective distances, powerful sound wave sources must be used;
- there are no universal signals that scare away all birds and rodents.

The prototype of the claimed invention is considered to be the method and device of acoustic impact on an intruder - RU 2436297.

The method of acoustic influence consists in sending two ultrasonic signals with different carrier frequencies. Here, this frequency difference corresponds to the frequency of the maximum sensitivity of the auditory pathway of the biological object.

The carrier frequencies of ultrasonic test signals are modulated in their amplitude by low-frequency signals. These infrasonic frequencies correspond to the resonance frequencies of human organs.

The ultrasound stimulation device contains:
- an ultrasonic generator with emitter of the first frequency;
- an ultrasound generator with a radiator of the second frequency;
- a pulsed infra(red) low frequency amplitude modulator. The output of the modulator is connected to the control inputs of the ultrasonic generators.

Acoustic exposure is performed with two directional narrowband signals. The signals affect the hearing of the intruder. The use of narrowband signals leads to a high electromechanical efficiency of the emitters (emitters) and their narrow directivity (directionality). This in turn leads to a high level of the dual-frequency sound field. This results in a low frequency signal with a difference frequency. The signal is located in the most sensitive frequency zone of the auditory pathway. This signal has a painful effect on the intruder. Its effects are due to the nonlinear properties of the auditory pathway [5, 6].

The disadvantages of the prior art are:
- a short range, because ultrasound has a large power loss when propagated in the air. Therefore, it is important that it is not transmitted in the air;
- the low sensitivity of hearing of most biological objects. Ultrasound is regularly outside the audible range.

The claimed invention eliminates the disadvantages of bioacoustic deterrents of the prior art. The claimed invention aims at solving problematic issues in the field of ornithological safety of civil aviation aircraft. The claimed invention aims at protecting objects of agriculture and food industry.

### Revealing the essence of the invention

The essence of the invention is the use of nonlinear effects. Nonlinear effects occur in the auditory organs of biological objects. They occur when two acoustic signals from the audible waveband are generated with different carrier frequencies. One frequency is swept/wobbled. The difference component of the frequencies is in the range of the lowest resonant frequencies of the biological object. Preferably, the difference component of the frequencies is additionally parametrically supported [7, 8] for example by a pulsed modulated optical and incoherent field in the visible waveband [9]. This effect is synchronized with the acoustic effect. The duration and repetition rate of the incoherent field pulses are similar to the parameters of the pulsed acoustic fields, i.e., the acoustic component from the previously described carrier frequencies.

At the same time:
- the sound pressure power of the acoustic signals is preferably lower than that of the known bioacoustic devices;
- the carrier frequency of the first acoustic signal is set;
- the first and second carrier frequencies are preferably in the range of the maximum sensitivity of the auditory pathway for biological objects, preferably in the range of 1 to 4 kHz. The carrier frequency of the second acoustic signal is swept. The difference component of the frequencies of the first and second carrier signals may be in the range of the lowest resonant frequencies of the biological object (infra-low frequency), preferably in the range of 1 to 20 Hz.
- the two carrier frequencies of the acoustic signals, are pulse modulated in amplitude with the pulse duration, where the pulse duration is preferably not less than the minimum duration of the sensitivity threshold of the auditory pathway for biological objects (250 milliseconds);
- the incoherent radiation in stroboscopic mode may have the most effective effect on the visual organs.

During the exposure of the objects, the received sweep/wobble difference component of the modulated acoustic signals coincides with the resonance frequency of their auditory organs. This excites the central nervous system. A modulated visible optical incoherent wave leads to spatial disorientation and temporal limitation of visual function. This leads to a behavioral response in the objects.

Thus, the invention has a strong synchronous complex effect on biological objects.

Thereby, the linear properties of the auditory and visual organs are influenced.

An experimental study of nonlinear parametric effects was performed on medium and large laboratory animals (75 animals). The effects on hearing, vision and central nervous system were recorded during the study.

The auditory organs of biological subjects were exposed to two acoustic signals from the audible waveband with different carrier frequencies. The frequencies had a sound pressure power of about 135 dB. When the bio-subjects were exposed to the most unfavorable conditions for exposure to the acoustic factor for 30 minutes, a temporary dysfunction of the auditory organ was observed. No clinically significant permanent changes or lesions of the auditory organ were observed. Generally, the required decibel are set experimentally in accordance with the physical situation of the premise to be protected and may comprise an experimental set-up phase.

The subjects' visual organs were exposed to an optical incoherent field in the visible wavelength range. Exposure to incoherent white radiation was assessed by quantitative evaluation of visual acuity. Visual acuity was determined by the physiological response of the eyes to the movement of biological objects. Visual acuity was determined by the optokinetic nystagmus registration method. Exposure was at maximum intensity in continuous and pulse modes. Exposure at the indicated intensity for an exposure time of 1 minute resulted in temporary blindness in 100% of cases, regardless of the mode. Recovery of optokinetic nystagmus occurred within 10 minutes after exposure in all cases.

Simultaneous exposure of biological objects to two acoustic signals resulted in a pronounced response of the central nervous system. Acoustic signals of audible waveband with different carrier frequencies and incoherent emission of white light in continuous and pulsed mode at the exposure time of 1 min resulted in behavioral responses of the central nervous system. The behavioral responses were as follows: Start response, avoidance response, and defense response. The central nervous system response was reliably recorded by neuro-electrophysiological methods. A pronounced appearance of a dominant rhythm with a frequency of 3-4 Hz was recorded in the electroencephalogram 1-2 minutes after the end of exposure. The proportion of theta rhythm (4-8 Hz) also increased. This meant an increase in psycho-emotional tension of the bio-object and an increase in anxiety. Up to 5 seconds after exposure, all bio-objects showed an avoidance response. The biological objects left the application area (the target field). As a result, they showed an avoidance response. The defensive behavior of the objects significantly predominated.

Immediately after exposure and one day later, no irreversible changes were observed in the behavior or physiological parameters of the biological objects. No clinically significant persistent changes or lesions of the central nervous system were observed.

The experimental results showed that nonlinear parametric exposure elicited a sustained avoidance response from biological objects and did not cause a habituation effect.

### Brief description of the drawings

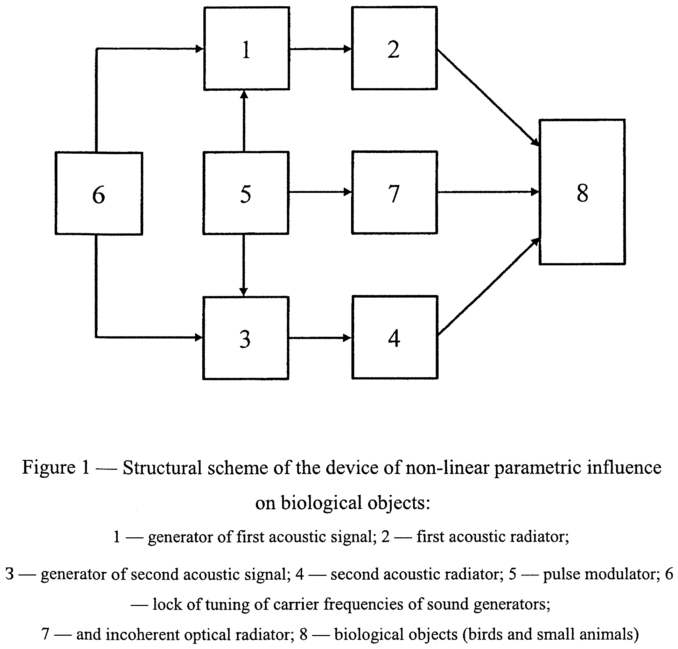

Fig.1 shows a schematic diagram of the device. The block diagram of the device implements the proposed method of nonlinear parametric manipulation of biological objects.

### Execution of the invention

The device for nonlinear parametric manipulation of biological objects includes:
- a first acoustic signal generator 1;
- a first acoustic radiator 2;
- a second acoustic signal generator 3;
- a second sound emitter 4;
- a pulse modulator 5;
- an acoustic oscillator carrier frequency tuning unit 6;
- a coherent optical emitter 7.

The device for nonlinear parametric manipulation of biological objects works as follows. Signals from the outputs of the pulse modulator 5 are fed to the acoustic signal generators 1, 3 and the incoherent optical transmitter 7. These signals contain information about the modulation parameters. From the generators the signals come to the acoustic radiators 2, 4. These are pulse-modulated acoustic signals in the audible range and of one frequency, which are separated by the tuning unit 6. The acoustic radiators form a strong, noisy, acoustic signal. The optical emitter, in turn, emits an incoherent signal in the visible wavelength range. The duration and pulse repetition rate of the signal are similar to pulsed acoustic signals. By using the nonlinear properties of the auditory organs of biological objects 8 and increasing their psychoemotional voltage, the device has a nonlinear parametric effect. This is due to parametric effects.

The device does not cause any addictive effect. The device forms a persistent reaction of avoidance of the exposure area.

### REFERENCES

1. https://www.birdgard.com/.
2. Grabovsky V. I., Moseshvili A. L. Ornithological protection of enterprise. Food Industry. 2010. No 5. p. 30 - 32.
3. https://www.weitech.ru/.
4. Russian Federation patent for invention dated April 13, 2010 N2 RU 2 436 297 C1. Method and device for acoustic exposure to an intruder. Authors: Shcherbakov G.N., Antselevich M.A.
5. Ioffe V.K. & others. Handbook of Acoustics, paragraph 2.6. Non-linear properties of hearing. M., pp. 42 - 43.
6. Aldoshina I. Non-linear properties of hearing. Sound engineer. 1999. No 7.
7. Shcherbakov G. N. Parametric location a new method of detection of hidden objects. Special Technique. 2000. No 4. p. 52 - 58.
8. Cherkesova L.V. Nonlinear parametric interactions in resonant systems of different physical nature under polyharmonic external influence. Izvestia Vuzov. Technical Sciences. 2003. No 4. p. 11 - 15.
9. Luizov A. V. Inertia of vision. Oborongiz. 1961. 249 c.

## Claims

1. Method for nonlinear parametric manipulation of a biological object, e.g. small animals, such as birds and rodents, based on the use of nonlinear parametric effects of auditory organs,
**characterized in that**
that the influence on the biological object is caused by two acoustic signals with different carrier frequencies,
that the carrier frequency of the first acoustic signal is fixed,
that the carrier frequency of the second acoustic signal is wobbling,
that the first and the second carrier frequency are in the range of the maximum sensitivity of the auditory pathway of the objects,
that the difference between these frequencies is in the range of the infra-threshold resonance frequencies of the biological object,
that a parametrically synchronized effect with a pulsed, modulated, optical, incoherent field in the visible wave range is also exerted on the biological objects, and
that the duration of the pulses as well as the frequency of their repetition are similar to the parameters of pulsed acoustic fields.

2. The method according to claim 1,
**characterized in that**
that the carrier frequencies are tuned to the range of maximum sensitivity of the object's auditory pathway in the hearing range.

3. The method according to claim 1,
**characterized in that**
that the carrier frequencies of the acoustic signals are pulse modulated in amplitude with a pulse duration not less than the minimum sensitivity threshold duration of the auditory organ of the object.

4. A device for nonlinear parametric manipulation of a biological object according to any one of claims 1 to 3, comprising sound generators (1, 3) with acoustic transmitters (2, 4) and a pulse modulator (5),
**characterized in that**
**in that** it has a unit for tuning the carrier frequencies of the sound oscillators (6),
that the output of the unit is connected to the control inputs of the audio oscillators (1, 3),
**in that** the nonlinear parametric influencing device comprises a noncoherent optical transmitter (7), and
that the input of a pulse modulator (5) is connected to the transmitter (7).
